# EUROPEAN PATENT APPLICATION

(11) **EP 2 787 302 A1**
(43) Date of publication of application: **08.10.2014**
(21) Application number: 12853855.0
(22) Date of filing: 28.11.2012
(51) Int. Cl.: F24J 2/07

(54) **CONFIGURATION OF THE RECEIVERS IN CONCENTRATED SOLAR PLANTS WITH TOWERS**

(30) Priority: 29.11.2011 ES 201101264 P
(71) Applicant: Abengoa Solar New Technologies, S.A., 41018 Sevilla (ES)
(72) Inventor: MÉNDEZ MARCOS, José Maria, E-41014 Sevilla (ES); DIAGO LÓPEZ, Maite, E-41014 Sevilla (ES); SERRANO GALLAR, Lucía, E-41014 Sevilla (ES); NAVÍO GILABERTE, Raúl, E-41014 Sevilla (ES)
(74) Representative: Garcia-Cabrerizo y del Santo, Pedro Maria
(86) International application number: PCT/ES2012/000297
(87) International publication number: WO 2013/079744

(57) **Abstract**

The invention relates to a configuration of the receivers in concentrated solar plants with towers comprising at least one medium-temperature receiver (3) and one high-temperature receiver (4) in which each high-temperature receiver (4) is located above and slightly in front of each medium-temperature receiver (3), such that a portion of the rays that bounce off the medium-temperature receiver (3) heats the rear portion of the high-temperature receiver (4) and in which the high-temperature receiver (4) is positioned such that the majority of the surface thereof is opposite the wall of the cavity (2), only the bottom potion of the receiver (4) remaining free.

## Description

### Technical sector of the invention

This invention belongs to the field of solar concentration technologies for the production of superheated steam, more specifically to the technology based on central receivers with tower and heliostat field for its application in the generation of electricity.

### Background of the invention

Even though solar radiation is a high-temperature thermal source from a high-energy origin, the use thereof in the flow conditions in which it arrives to the surface of the earth practically destroys its entire potential to be converted into work due to the drastic reduction of the available temperature. This is the reason for the use of solar thermal power plants (STPP) and of optical concentration systems, which allow the attainment of greater flow densities, and with it, higher temperatures.

Currently, there are three different technologies that have been developed for use in solar plants, which are: central receivers, parabolic-trough collectors, and Stirling discs. All of these technologies only use the direct component of the solar radiation, which forces them to have solar tracking devices.

The claimed invention belongs to the tower or central receiver systems (3D). These systems use mirrors with large surfaces (40-125 m² per unit) known as heliostats, which are provided with a control system to reflect direct solar radiation on a central receiver located on the upper part of a tower. With this technology, the concentrated solar radiation heats a fluid to temperatures of up to 1000 °C in the receiver, which thermal energy can then be used for the generation of electricity.

Currently, there are different types of receivers with different configurations. Among others, we have medium-temperature receivers and high-temperature receivers. If the heat-carrying fluid is water, the medium-temperature receivers are also known as saturated steam receivers or evaporators, and high-temperature receivers are known as superheated steam receivers. A boiler is installed between them.

Solar concentration receivers with towers can be external or can be arranged in a cavity located in the upper part of the tower with the purpose of decreasing thermal losses. The configuration must allow the incident power to exceed the radiation and convection losses in size. In the superheated steam receivers, the temperature reached at the surface is higher than the temperature reached at the saturated steam receivers, due to which the radiation losses are also greater; however, they have the advantage of increasing the efficiency of the thermodynamic cycle, with which these losses would be compensated.

Patent WO2009121030A2 proposes different panel and tube configurations with the purpose of absorbing the incident concentrated solar radiation. The majority of the configurations include tubes or panels with transparent parts that are very different than the configuration proposed in this patent and the objectives and advantages to be described in the following sections.

Patent US20080078378 proposes a panel configuration which consists in locating the panels of the superheated steam receiver above the panels of the saturated steam receiver.

Patent WO2011030331A2 claims several boiler and saturated steam and superheated steam receiver configurations. Configurations with both receivers located in a concentric manner and configurations where the saturated steam receiver and the superheated steam receiver are physically separated.

Due to the foregoing, the objective of the present invention is to design a receiver configuration grouping the advantages of using high-temperature steam by solving the existing risks, thereby achieving a greater control of the plant and thereby favoring the stability and durability of the plant and its components.

### Description of the invention

The present invention relates to a configuration of the receiver in concentrated solar plants with towers with a physical separation between the medium-temperature and high-temperature receivers.

In the cases when the heat-carrying fluid is water, the medium-temperature receiver is where the evaporation of the heat-carrying fluid takes place, thereby obtaining saturated heat the exit thereof. The superheating of said steam takes place at the high-temperature receiver. A boiler or phase separator is installed between both receivers, which ensures that only steam enters the high-temperature receiver.

The separation of the evaporation phase from the superheating phase reduces the technological risk, given that since there is no change of phase in the receiver, the problems associated with the high temperature gradients derived from the different film coefficients of both phases will not exist either. In addition, the control problems associated with the variability in the solar resource will drastically decrease as well. This system, unlike the known state of the art, does not locate the modules of the medium and high-temperature receivers far away from each other; rather, the configuration proposed in the invention comprises one or more independent medium-temperature receivers or one ore more high-temperature receivers located in such a way that the high-temperature receivers are physically located above and slightly in front of the medium-temperature receivers.

A series of boilers or separators are located between them, which ensures that the two-phase fluid leaving the medium-temperature receivers enter the high-temperature receivers only as steam.

The receiver and panel configuration proposed herein is valid whether they are found inside a cavity or not. If the design of the receiver inside the cavity is used, the thermal losses in the receiver following this configuration, that is to say, with the high-temperature receiver above the medium-temperature receiver, decrease with respect to other configurations with the receiver inside the cavity where the receivers are separated in different cavities.

The foregoing is due to the fact that, in the claimed configuration and with the receivers inside a cavity, the center of the opening thereof (through which the incident radiation enters) is located below the lower limit of the high-temperature receiver such that the majority of the surface thereof is opposite the inner wall of the cavity. This wall is generally coated with a reflective insulation material. Given the location of the receiver at the top of the tower, the solar rays reflected by the heliostats impinge with no problem on the entire surface of the receiver because they enter from below with a certain trajectory, and even though the high-temperature receiver is not facing the opening of the cavity, the radiation enters through the opening, reaching the high-temperature receiver and without impacting the outer walls of the cavity.

The consequence of the majority of the surface of the high-temperature receiver facing the inside of the cavity and a very small part of the opening is that it allows a high percentage of the energy emitted by the high-temperature receiver in the form of radiation losses to reach the insulation material inside the cavity and to be reflected and subsequently reabsorbed by the high-temperature receiver itself or by the medium-temperature receiver, thereby decreasing the losses and increasing the efficiency of the plant.

Another characteristic of this configuration is placing the high-temperature receiver slightly in front with respect to the medium-temperature receiver. Due to this configuration, a portion of the rays that is reflected in the medium-temperature receiver reaches the rear face of the high-temperature. Until now, the production of saturated steam has been successfully tested in panels where the radiation impinges only in one of its faces. In these cases, the convection coefficient of the enormous flows of saturated recirculation liquid and the relatively low temperatures of the fluid circulating through the medium-temperature receivers avoid having metal temperatures that are too high. However, in high-temperature receivers where radiation only impinges in one of their faces and where steam circulates at very high temperatures, we expect metal temperatures above 600 °C in some zones, leading to the creation of material strains. In the case of the high-temperature receivers of the invention, they receive radiation in both faces at the most critical zone thereof (the zone where the peak flows are greater and with the highest metal temperatures), given that they absorb the radiation coming from the heliostat from the front, but that they also receive radiation from behind in the lower part because that the majority of the energy reflected in the upper part of the medium-temperature receivers located behind impinges in this zone.

The configuration described herein therefore allows the homogenization of the metal temperature of the lower area of the high-temperature receivers, with the technical advantages that this implies: much lower existing strain and much more uniform deformations in the most critical zone of the high-temperature receivers, thereby achieving an extension in the life of the materials.

In a configuration such as the one proposed in this patent, it is convenient for the heliostats with a smaller spot or projection (for example, the heliostats that are closer to the tower) to be focused towards the high-temperature panels in order to have lower overflow losses (given that it is necessary to have a minimum number of heliostats focused towards these panels to provide a certain power to the receiver) and a better control of peak flows in the high-temperature receiver. The heliostats that are closer to the tower will then be focused towards a higher point (the center of the high-temperature receiver) than the rest of the heliostats, due to which the average annual energy they are capable of reflecting will be greater than in other configurations where the high-temperature receiver is not located above the medium-temperature receiver (due to the cosine effect, blockages, and shadows). Therefore, in this type of configurations, the gross energy reaching the solar receivers is also increased.

The aforementioned advantages are valid when the heat-carrying fluid is water/steam or in the case of oils, salts, or any other fluid.

This configuration is such that it allows simplifying the control of the plant, decreasing the power flow requirements thereof (by increasing the efficiency of the receiver) and improving the performance thereof against transient events or during start-ups or shutdowns. And superheated steam is obtained in an efficient and controlled manner in order to guarantee the permanent durability and normal operation of said solar plant in its different applications; production of electricity, production of process heat, production of solar fuels and application to thermochemical processes.

### Description of the drawings

In order to supplement the preceding description and with the purpose of facilitating a better comprehension of the characteristics of the invention, a detailed description of a preferred embodiment will be made below based on a set of drawings attached to this specification representing the following in an illustrative rather than limitative manner:
Figure 1 shows a scheme of a tower with three cavities, each containing a medium-temperature receiver and a high-temperature receiver.
Figure 2 shows a two-dimensional view of the proposed configuration and a basic layout for medium and high-temperature receivers inside a cavity.

In the previous figures, the numerical references correspond to the following parts and elements:
1.- Central tower.
2.- Cavities
3.- Medium-temperature receiver (saturated steam receiver or evaporator)
4.- High-temperature receiver (super-heater)
5.- Insulation
6.- Opening

### Preferred embodiment of the invention

In order to facilitate the comprehension of the invention, a preferred embodiment is exposed below in a detailed manner and based on the figures:

In this preferred embodiment, the heat-carrying fluid circulating through the installation is water, such that the medium-temperature receiver (3) is known as the saturated steam receiver or evaporator and the high-temperature receiver (4) is known as the superheated steam receiver.

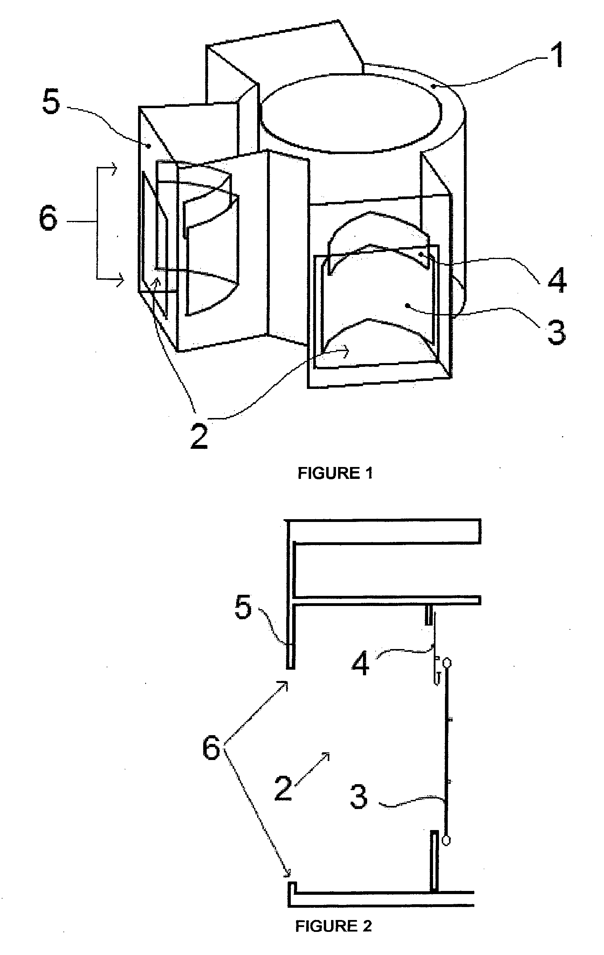

As shown in figure 1, in a preferred embodiment, the design of the configuration or location of the receivers (3, 4) on top of the tower (1) would be the following: three saturated steam receivers (3) and three superheated steam receivers (4), located two by two in three different cavities (2). The superheated steam receivers (4) are located above and slightly in front of the saturated steam receivers (3).

In the preferred embodiment, the saturated steam receiver (3) is formed by vertical tubes and the superheated steam receiver (4) by horizontal or vertical tubes, in both cases with collectors at the fluid inlet and outlet in the receiver. A receiver of each type is placed in each cavity (2), with several planes for each saturated steam (3) and superheated steam receiver (3) (that it to say, the panels form different angles with respect to a certain direction).

Several cavities (2) are also considered in the same tower (1), oriented towards different places, with a boiler located above the superheated steam receiver (4) in each one of the built cavities.

The global efficiency of the solar receiver increases with this configuration because the thermal losses are decreased due to the position of the superheated steam receiver (4) (with the higher wall temperatures) facing in its majority the wall of the cavity (2) and in consequence the insulation (5) of said wall, as shown in figure 2.

The radiation reaches the receivers from each one of the orientations, and as long as the same only impinges one of the faces of the saturated receivers (3), the superheated receivers (4) are illuminated on both faces since part of the radiation reflected by the saturated steam receiver (3) impinges on the lower zone of the rear face. This zone, the lower zone, is a critical zone, given that the peak flows are greater; therefore, receiving heat from both faces helps to decrease material strain.

In addition, the annual gross energy received by the receiver increases because some of the heliostats have a higher focus point than the one estimated for other configurations.

## Claims

1. Configuration of the receivers in concentrated solar plants with towers having a series of heliostats around their base reflecting solar radiation towards at least one medium-temperature receiver (3) and one high-temperature receiver (4) installed in cavities (2), **characterized in that** each high-temperature receiver (4) is located above and slightly in front of each medium-temperature receiver (3), such that a portion of the rays that bounce off the medium-temperature receiver (3) heat the rear part of the high-temperature receiver.

2. Configuration of the receivers in concentrated solar plants with towers according to claim 1, **characterized in that** the high-temperature receiver (4) is located such that the center of the opening (6) of the cavity (2) where it is installed is located below the lower limit of the high-temperature receiver (4) such that the majority of the surface of the receiver (4) is opposite the inner wall of the cavity (2).

3. Configuration of the receivers in concentrated solar plants with towers according to claim 1, **characterized in that** the heat-carrying fluid is water and the medium-temperature receiver (3) is the evaporator or saturated steam receiver and the high-temperature receiver (4) is the super-heater.

4. Configuration of the receivers in concentrated solar plants with towers according to claim 3, **characterized in that** the saturated steam receiver (3) is formed by vertical tubes and the superheated steam receiver (4) by horizontal or vertical tubes, in both cases with collectors at the fluid inlet and outlet in the receiver.

5. Configuration of the receivers in concentrated solar plants with towers according to claim 1, **characterized in that** the tower comprises three saturated steam receivers (3) and three superheated steam receivers (4), located two by two in three different cavities (2).

6. Configuration of the receivers in concentrated solar plants with towers according to claim 1, **characterized in that** the heliostats with a smaller spot or projection (for example heliostats that are closer to the tower) are focused towards a higher point than the rest of the heliostats because they aim towards the panels of the high-temperature receiver (4).
